# EUROPEAN PATENT APPLICATION

(11) **EP 3 381 550 A1**
(43) Date of publication of application: **03.10.2018**
(21) Application number: 18160543.7
(22) Date of filing: 07.03.2018
(51) Int. Cl.: B01J 23/02, B01J 23/10, B01J 35/00, B01D 53/86, B01D 53/94

(54) **EXHAUST GAS PURIFICATION CATALYST**

(30) Priority: 31.03.2017 JP 2017073073
(71) Applicant: Toyota Jidosha Kabushiki Kaisha, Aichi-Ken 471-8571 (JP)
(72) Inventor: OTA, ERIKO, Aichi-ken, 471-8571 (JP)
(74) Representative: J A Kemp

(57) **Abstract**

The exhaust gas purification catalyst of the present invention includes a ceria particle as a support, and barium supported on the ceria particle, wherein the ceria particle contains lanthanum in its surface part and when the ceria particle is measured by an X-ray photoelectric spectroscopy, the value of the molar ratio of lanthanum atom to cerium atom is 0.029 or more.

## Description

### Technical Field

The present invention relates to an exhaust gas purification catalyst.

### Background Art

In an exhaust gas discharged from an internal combustion engine for an automobile, etc., for example, from a gasoline engine or a diesel engine, ingredients such as carbon monoxide (CO), hydrocarbon (HC) and nitrogen oxide (NOx) are contained.

Accordingly, an exhaust gas purifying apparatus for purifying these ingredients is generally provided in an internal combustion engine, and the ingredients are substantially purified by an exhaust gas purification catalyst mounted in the exhaust gas purifying apparatus.

As such an exhaust gas purification catalyst, for example, a NOx storage/reduction catalyst is known. The NOx storage/reduction catalyst is a catalyst where NOx in the exhaust gas is stored in a lean atmosphere and is reduced to nitrogen (N₂) in stoichiometric and rich atmospheres.

In general, the NOx storage/reduction catalyst possesses the possibility to deteriorate with a high-temperature exhaust gas. For example, under a high-temperature environment, particles of barium known as a NOx storage material may aggregate mutually to degrade the NOx storage performance of the NOx storage/reduction catalyst. Accordingly, various studies are being made so as to suppress deterioration of the NOx storage/reduction catalyst.

In the catalyst support described in Japanese Patent No. 5,018,882, a rare earth element oxide fine particle composed of a primary particle of an oxide of a rare earth element such as lanthanum, an alumina fine particle composed of a primary particle of alumina, and a barium compound fine particle composed of a primary particle of a barium compound are mixed with each other, the primary particle diameter of the rare earth element oxide fine particle is 5 nm or less, and the primary particle diameter of the barium compound fine particle is 10 nm or less. In this patent document, it is stated that the lanthanum oxide as the rare earth element oxide interacts with barium and thereby effectively suppresses the particle growth of a platinum fine particle and the particle growth of a barium compound fine particle.

### Summary of the Invention

An object of the present invention is to provide an exhaust gas purification catalyst having enhanced NOx storage performance.

The present inventors have found that the object above can be attained by the following means.
<1> An exhaust gas purification catalyst including a ceria particle as a support, and barium supported on the ceria particle, wherein
   the ceria particle contains lanthanum in its surface part, and
   when the ceria particle is measured by X-ray photoelectric spectroscopy, the value of the molar ratio of lanthanum atom to cerium atom is 0.029 or more.
<2> The exhaust gas purification catalyst according to item <1>, wherein when the total amount of ceria and lanthana is taken as 100 parts by mass, the amount of barium supported is 1 part by mass or more and 24 parts by mass or less.
<3> The exhaust gas purification catalyst according to item <1> or <2>, wherein the particle diameter of the ceria particle is 100 nm or less.
<4> The exhaust gas purification catalyst according to any one of items <1> to <3>, wherein a catalyst metal is further supported on the ceria particle.
<5> The exhaust gas purification catalyst according to any one of items <1> to <4>, which is a catalyst for purifying NOx.
<6> A process for purifying NOx in an exhaust gas comprising contacting the exhaust gas with the exhaust gas purification catalyst according to item <1>.

### Brief Description of the Drawings

Fig. 1a illustrates a schematic diagram of the state where lanthanum is present inside a ceria particle.
Fig. 1b illustrates a schematic diagram of the state where lanthanum is present in the surface part of a ceria particle.
Fig. 1c illustrates a schematic diagram of the state where lanthanum is present on the outermost surface of a crystalline ceria particle.
Fig. 2a is a diagram illustrating element mapping of the catalyst support of Comparative Example 2.
Fig. 2b is a diagram illustrating element mapping of the catalyst support of Example 4.
Fig. 3 is a diagram illustrating the relationship between La/Ce and the NOx storage amount (µmol/Ce-g), regarding the catalysts supports of Examples 1, 2, 4, 6 and 7 and Comparative Example 2.
Fig. 4 is a diagram illustrating the relationship between (parts by mass) of barium and the NOx storage amount (µmol/Ce-g), regarding the catalysts supports of Examples 1 to 5 and Comparative Examples 1 to 4.

### Mode for Carrying Out the Invention

The embodiments of the present invention are described in detail below. The present invention is not limited to the following embodiments but may be implemented by making various modifications therein within the scope of the gist of the present invention.

### (Conventional Exhaust Gas Purification Catalyst)

As described above, conventionally, when a NOx storage/reduction catalyst containing barium as a NOx storage material is exposed to a high-temperature environment, a barium particle may readily undergo particle growth, and the NOx storage performance is thereby degraded. Incidentally, barium is sometimes contained as barium oxide in the NOx storage/reduction catalyst. Accordingly, the expression of barium particle encompasses a barium oxide particle.

The present inventors have therefore studied means for suppressing the particle growth of a barium oxide particle, particularly means for suppressing it in a high-temperature region, and have realized the following exhaust gas purification catalyst of the present invention.

### (Exhaust Gas Purification Catalyst of the Present Invention)

The exhaust gas purification catalyst of the present invention includes a ceria particle as a support, and barium supported on the ceria particle, wherein the ceria particle contains lanthanum in its surface part and when the ceria particle is measured by X-ray photoelectric spectroscopy, the value of the molar ratio of lanthanum atom to cerium atom is 0.029 or more.

In the exhaust gas purification catalyst of the present invention, the ceria particle contains lanthanum in its surface part, so that particle growth of barium can be efficiently suppressed. Specifically, although not intended to be bound by any theory, it is believed that a crystal plane of lanthanum or an oxide thereof is joined with a crystal plane of barium to prohibit movement of a particle of the barium and the particle growth of a barium oxide particle can thereby be suppressed.

Accordingly, the exhaust gas purification of the present invention exhibits high NOx storage and/or adsorption ability in a high-temperature region, so that an exhaust gas purification catalyst having enhanced NOx storage performance can be provided.

Incidentally, the lanthanum contained in the ceria particle may be in the form of lanthana that is an oxide of lanthanum.

### <Support>

In the exhaust gas purification catalyst of the present invention, the particle diameter of the ceria particle as a support is not particularly limited but may be 1 nm or more, or 2 nm or more, and may be 100 nm or less, 70 nm or less, or 50 nm or less. In the case where the particle diameter of the ceria particle is in a given range, for example, in the range from 1 to 100 nm, the specific surface area of the support is large and therefore, the NOx storage and/or adsorption performance is enhanced.

In the present invention, the "particle diameter" means an equivalent-circle diameter (Heywood diameter) of a particle measured by means of a scanning transmission electron microscope (STEM), etc. In addition, the "average value of the particle diameter" indicates a value obtained by measuring the equivalent-circle diameter on randomly selected 100 or more, 300 or more, or 500 or more particles, and arithmetically averaging (on the number basis) the measured values.

The ceria particle as a support of the exhaust gas purification catalyst of the present invention contains lanthanum in its surface part. Regarding the amount of lanthanum present in the surface part of the ceria particle, the value of the molar ratio of lanthanum atom to cerium atom may be 0.029 or more, 0.032 or more, 0.039 or more, of 0.097 or more. In the case where the value of the molar ratio of lanthanum atom to cerium atom is large, for example, 0.029 or more, the particle growth of barium can be more efficiently suppressed.

In this specification, the "surface part of the ceria particle" means a portion represented by a depth from the outermost surface of the ceria particle, which is judged from the following measurement conditions (a) to (c) at the time of measuring the ceria particle by X-ray Photoelectron Spectroscopy (XPS):
(a) X-ray source: Mg STD,
(b) output: 400 (W), and
(c) analysis area φ: 1,000 (µm).

Incidentally, the XPS measurement is a measurement method for analyzing the composition and chemical bonding state of elements constituting a sample surface part by irradiating the sample surface with an X-ray and measuring the kinetic energy of photoelectron emitted from the sample surface.

With respect to the amount of lanthanum present in the surface part of the ceria particle that is a support of the exhaust gas purification catalyst of the present invention, when the ceria particle is measured by X-ray photoelectric spectroscopy, the value of the molar ratio of lanthanum atom to cerium atom may be 0.30 or less, 0.25 or less, 0.20 or less, or 0.154 or less. When the value of the molar ratio of lanthanum atom to cerium atom is 0.3 or less, the likelihood of aggregation of lanthanum particles can be reduced.

### <NOx Storage Material>

In the exhaust gas purification catalyst of the present invention, barium as a NOx storage material is supported on a ceria particle. In addition to barium, an alkali metal, an alkaline earth metal, or an oxide thereof may be supported on the ceria particle.

When the amount of ceria (CeO₂) and lanthana (La₂O₃) is taken as 100 parts by mass, the amount of barium supported may be 1 part by mass or more, 3 parts by mass or more, 5 parts by mass or more, or 8 parts by mass or more, and may be 24 parts by mass or less, 21 parts by mass or less, or 18 parts by mass or less. When the amount of barium supported is 1 part by mass or more, the number of active sites of a barium oxide particle is large and therefore, the NOx storage amount increases. When the amount of barium supported is 24 parts by mass or less, aggregation of barium oxide particles with each other can be suppressed.

### <Catalyst Metal>

On the ceria particle, a catalyst metal may be supported. The catalyst metal is not particularly limited but includes, for example, a noble metal such as platinum, palladium and rhodium, and a composite composition thereof.

The amount of the catalyst metal supported is not particularly limited but, in general, the amount supported per 100 parts by mass of ceria and lanthana may be 0.01 parts by mass or more, 0.10 parts by mass or more, or 1.00 parts by mass or more, and/or may be 5.00 parts by mass or less, 3.00 parts by mass or less, or 1.00 parts by mass or less. When the amount of the catalyst metal supported is small, for example, 5.00 parts by mass or less, the cost of the catalyst metal can be reduced. On the other hand, when the amount of the catalyst metal supported is large, for example, 0.01 parts by mass or more, the catalytic activity is enhanced.

### (Production Method of Exhaust Gas Purification Catalyst)

Embodiments of the method of the present invention for producing an exhaust gas purification catalyst are described below. The following embodiments are merely exemplary, and the method of the present invention is not limited thereto.

### First Embodiment:

A first embodiment of the method of the present invention for producing an exhaust gas purification catalyst includes adding an alkali solution to a solution containing a ceria salt and a lanthanum salt to precipitate a composite oxide containing cerium and lanthanum, drying and/or firing the composite hydroxide to prepare a lanthanum-added ceria particle, and immersing the lanthanum-added ceria particle in a barium-containing solution to load barium on the lanthanum-added ceria particle, wherein in the solution containing a ceria salt and a lanthanum salt, the value of the molar ratio of lanthanum atom to cerium atom is 0.057 or more, 0.060 or more, or 0.63 or more.

In the first embodiment of the method of the present invention for producing an exhaust gas purification catalyst, a composite oxide containing cerium and lanthanum is prepared. Accordingly, in a ceria-lanthanum composite fine particle produced therefrom, the distribution of ceria and lanthanum is substantially uniform, and the distribution in the inside of the lanthanum-added ceria particle and the distribution in the surface part thereof are substantially the same.

As described above, in the solution containing a ceria salt and a lanthanum salt, the value of the molar ratio of lanthanum atom to cerium atom is 0.057 or more. Accordingly, when the resulting lanthanum-added ceria particle is measured by X-ray photoelectron spectroscopy, the value of the molar ratio of lanthanum atom to cerium atom is likely to become 0.029 or more.

In the solution containing a ceria salt and a lanthanum salt, the value of the molar ratio of lanthanum atom to cerium atom may be 0.400 or less, 0.300 or less, 0.250 or less, 0.200 or less, 0.186 or less, 0.150 or less, 0.130 or less, or 0.110 or less. When the resulting lanthanum-added ceria particle is measured by X-ray photoelectron spectroscopy, the value of the molar ratio of lanthanum atom to cerium atom is likely to become 0.30 or less.

### Second Embodiment:

A second embodiment of the method of the present invention for producing an exhaust gas purification catalyst includes adding and immersing a ceria particle in a lanthanum salt-containing solution, drying and/or firing the ceria particle to prepare a lanthanum-added ceria particle, and immersing the lanthanum-added ceria particle in a barium-containing solution to load barium on the lanthanum-added ceria particle, wherein in the solution containing a ceria particle and a lanthanum salt, the value of the molar ratio of lanthanum atom to cerium atom is 0.057 or more, 0.060 or more, or 0.63 or more.

In the second embodiment of the method of the present invention for producing an exhaust gas purification catalyst, a ceria particle is immersed in a lanthanum salt-containing solution. Accordingly, the lanthanum concentration near the surface of the resulting ceria particle is relatively high. Consequently, when the resulting lanthanum-added ceria particle is measured by X-ray photoelectron spectroscopy, the value of the molar ratio of lanthanum atom to cerium atom is more likely to become 0.029 or more.

In the solution containing a ceria particle and a lanthanum salt, the value of the molar ratio of lanthanum atom to cerium atom may be 0.400 or less, 0.300 or less, 0.250 or less, 0.200 or less, 0.186 or less, 0.150 or less, 0.130 or less, or 0.110 or less. When the resulting lanthanum-added ceria particle is measured by X-ray photoelectron spectroscopy, the value of the molar ratio of lanthanum atom to cerium atom is likely to become 0.30 or less.

Although not bound by any theory, it is believed that when many voids or pores are present in a ceria particle, the lanthanum solution relatively easily penetrates inside of the ceria particle and lanthanum strongly tends to be present on the surface and inside of the ceria particle. On the other hand, although not bound by any theory, it is believed that when the number of voids or pores is small, the lanthanum solution is difficult to penetrate inside of the ceria particle and lanthanum strongly tends to be present near the surface of the ceria particle.

In the second embodiment, the ceria particle may be prepared by adding an alkali compound and/or a solution containing the compound to a ceria salt-containing solution to precipitate a ceria hydroxide, and drying and/or firing the precipitate, or a commercially available product may be used.

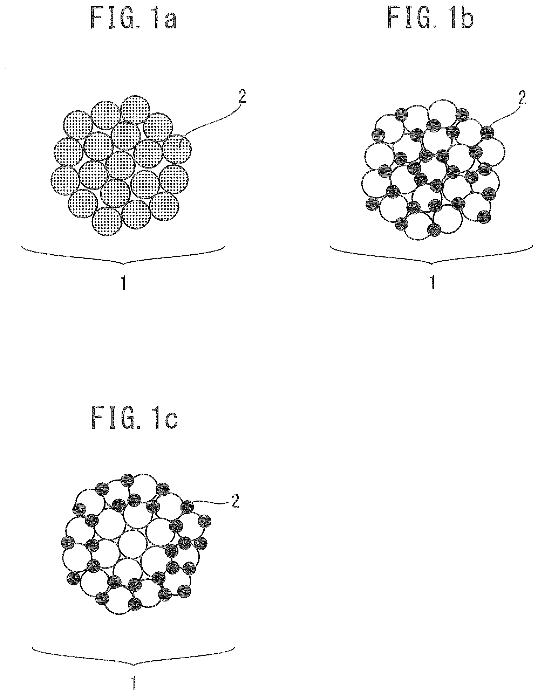

Figs. 1a, 1b and 1c illustrate, respectively, the state where lanthanum is present inside a ceria particle, the state where lanthanum is present in the surface part of a ceria particle, and the state where lanthanum is present on the outermost surface of a crystalline ceria particle.

### <Salt of Cerium and Salt of Lanthanum>

The salt of cerium and the salt of lanthanum are not particularly limited. The salt of cerium may be, for example, nitrate or phosphate of cerium, and the same applies to the salt of lanthanum.

### <Alkali Solution>

In the case of adding an alkali to a solution containing a cerium salt or a lanthanum salt to make the solution alkaline, a cerium hydroxide, a lanthanum hydroxide, or a composite hydroxide thereof is formed. The alkali solution is not particularly limited but may be, for example, an ammonia solution.

The pH of the solution having added thereto an alkali solution is not particularly limited but may be from 7 to 14, from 8 to 13, or from 8.5 to 12.

### <Material of NOx Storage Material>

The raw material of barium as a material of the NOx storage material is not particularly limited but may be nitrate, phosphate, etc., of barium.

The addition amount of the barium raw material is not particularly limited but may be such an addition amount that it is, in terms of only barium, 1 part by mass or more, 3 parts by mass or more, 5 parts by mass or more, or 8 parts by mass or more, and 24 parts by mass or less, 21 parts by mass or less, or 18 parts by mass or less, per 100 parts by mass of the lanthanum-added ceria. When the amount of barium supported is 1 part by mass or more, the number of active sites is advantageously large. When the amount of barium supported is 24 parts by mass or less, aggregation of barium oxide particles with each other can be suppressed. Incidentally, barium oxide sometimes reacts with a component in the exhaust gas and is present in the form of barium nitrate, barium carbonate, etc.

### <Drying and Firing Treatments>

### (Drying)

The temperature at the time of drying a hydroxide or a slurry containing a ceria particle having supported thereon barium as a NOx storage material is not particularly limited but may be 80°C or more, 90°C or more, or 100°C or more, and may be 150°C or less, 140°C or less, or 130°C or less.

The drying time is not particularly limited but may be 1 hour or more, 3 hours or more, or 6 hours or more, and may be 36 hours or less, 24 hours or less, or 12 hours or less.

### (Firing)

The temperature at the time of firing a hydroxide, a slurry containing a ceria particle having supported thereon barium as a NOx storage material, or a dried product thereof is not particularly limited but may be 300°C or more, 400°C or more, or 500°C or more, and may be 700°C or less, 650°C or less, or 600°C or less.

The firing time is not particularly limited but may be 1 hour or more, 2 hours or more, or 3 hours or more, and may be 12 hours or less, 6 hours or less, or 4 hours or less.

The firing atmosphere is not particularly limited but may be an air atmosphere or an inert atmosphere.

The present invention is described in greater detail below by referring to Examples, but the scope of the present invention is of course not limited to these Examples.

### Examples:

### (Example 1)

An aqueous solution containing cerium nitrate hexahydrate and lanthanum nitrate hexahydrate was stirred, and an aqueous ammonia solution was added to the aqueous solution and stirred to adjust the pH of the solution to 8.5, thereby precipitating a composite hydroxide containing cerium and lanthanum. The obtained composite hydroxide was dried at 100°C over 24 hours and fired at 500°C over 2 hours to obtain a lanthanum-added ceria particle.

The ceria particle was added to an aqueous barium acetate solution and then dried at 100°C over 24 hours while stirring the aqueous solution, and barium as a NOx storage material was thereby supported on the ceria particle. In this way, the catalyst support of Example 1 was obtained.

### (Example 2)

An aqueous solution containing cerium nitrate hexahydrate was stirred, and an aqueous ammonia solution was added to the aqueous solution and stirred to adjust the pH of the solution to 8.5, thereby precipitating a cerium hydroxide. The obtained precipitate was dried at 100°C over 24 hours and fired at 500°C over 2 hours to obtain a ceria particle. The obtained ceria particle was added to an aqueous solution containing lanthanum nitrate hexahydrate and dried at 100°C over 24 hours, and the dried product was fired at 500°C over 2 hours to obtain a lanthanum-added ceria particle.

Furthermore, the ceria particle was added to an aqueous barium acetate solution and then dried at 100°C over 24 hours while stirring the aqueous solution, and barium as a NOx storage material was thereby supported on the ceria particle. In this way, the catalyst support of Example 2 was obtained.

### (Examples 3 to 5)

A commercially available ceria particle (produced by Anan Kasei Co., Ltd., Model HSA20SP, (crystal grain of) particle diameter: 7 nm) was added to an aqueous solution containing lanthanum nitrate hexahydrate and dried at 100°C over 24 hours. The dried product was fired at 500°C over 2 hours to obtain a lanthanum-added ceria particle.

Furthermore, the ceria particle was added to an aqueous barium acetate solution and then dried at 100°C over 24 hours while stirring the aqueous solution, and barium as a NOx storage material was thereby supported on the ceria particle. In this way, the catalyst supports of Examples 3 to 5 were obtained. Incidentally, the catalyst supports of Examples 3 to 5 are different in the amount of barium supported. Specifically, based on 100 parts by mass of lanthanum-added ceria, barium is supported in an amount of 2 parts by mass (Example 3), 8 parts by mass (Example 4), and 24 parts by mass (Example 5).

### (Examples 6 and 7)

The catalyst supports of Examples 6 and 7 were prepared in the same manner as in Examples 3 to 5 except that the amounts of ceria particle and lanthanum nitrate hexahydrate were changed. In the catalyst supports of Examples 6 and 7, the amount of barium supported was 8 parts by mass based on 100 parts by mass of lanthanum-added ceria.

### (Comparative Examples 1 to 3)

A ceria particle prepared using cerium nitrate was added to an aqueous barium acetate solution and then dried at 100°C over 24 hours while stirring the aqueous solution, and barium as a NOx storage material was thereby supported on the ceria particle. In this way, the catalyst supports of Comparative Examples 1 to 3 were obtained. The catalyst supports of Comparative Examples 1 to 3 are different in the amount of barium supported.

### (Comparative Example 4)

The catalyst support of Comparative Example 4 was prepared in the same manner as in Examples 3 to 5 except that barium as a NOx storage material was not supported.

The reagents used in Examples 1 to 7 and Comparative Examples 1 to 4 and the amounts thereof are shown in Table 1 below, and the compositions of the catalysts of these examples are shown in Table 2 below.

**Table 1**

| Example | CeO₂ (g) | Cerium Nitrate Hexahydrate (g) | Lanthanum Nitrate Hexahydrate (g) | Barium Acetate (g) |
|---|---|---|---|---|
| Example 1 | 0.0 | 73.80 | 3.98 | 4.92 |
| Example 2 | 0.0 | 73.80 | 3.98 | 4.92 |
| Example 3 | 28.5 | 0.00 | 3.98 | 1.14 |
| Example 4 | 28.5 | 0.00 | 3.98 | 4.92 |
| Example 5 | 28.5 | 0.00 | 3.98 | 17.80 |
| Example 6 | 27.0 | 0.00 | 7.97 | 4.92 |
| Example 7 | 25.5 | 0.00 | 11.95 | 4.92 |
| Comparative Example 1 | 30.0 | 0.00 | 0.00 | 1.14 |
| Comparative Example 2 | 30.0 | 0.00 | 0.00 | 4.92 |
| Comparative Example 3 | 30.0 | 0.00 | 0.00 | 17.80 |
| Comparative Example 4 | 28.5 | 0.00 | 3.98 | 0.00 |

**Table 2**

| Example | CeO₂ (mass%) | La₂O₃ (mass%) | Ba (parts by mass) | La/Ce (entire) |
|---|---|---|---|---|
| Example 1 | 95 | 5 | 8 | 0.057 |
| Example 2 | 95 | 5 | 8 | 0.057 |
| Example 3 | 95 | 5 | 2 | 0.057 |
| Example 4 | 95 | 5 | 8 | 0.057 |
| Example 5 | 95 | 5 | 24 | 0.057 |
| Example 6 | 90 | 10 | 8 | 0.117 |
| Example 7 | 85 | 15 | 8 | 0.186 |
| Comparative Example 1 | 100 | 0 | 2 | 0.000 |
| Comparative Example 2 | 100 | 0 | 8 | 0.000 |
| Comparative Example 3 | 100 | 0 | 24 | 0.000 |
| Comparative Example 4 | 95 | 5 | 0 | 0.057 |

Here, "La/Ce (entire)" in Table 2 means the total molar mount of lanthanum relative to the total molar amount of cerium (Ce) in the catalyst support, and "Ba (parts by mass)" in Table 2 means the parts by mass of barium when the total amount of ceria (CeO₂) and lanthana (La₂O₃) is taken as 100 parts by mass.

### (Evaluation 1: EDS analysis)

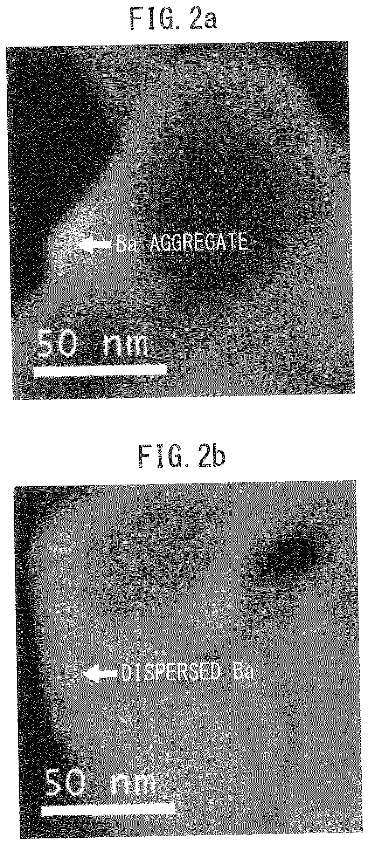

The catalyst supports of Example 4 and Comparative Example 2 were subjected to a thermal endurance test at a temperature of 780°C over 20 hours in an air atmosphere, and element mapping by Energy dispersive X-ray spectrometry (EDS) of these catalyst supports was created. In the creation of element mapping, an Atomic Resolution Electron Microscope (JEM-ARM300F, manufactured by JEOL Ltd.) with a Cs corrector was used. Figs. 2(a) and (b) illustrate the results.

Fig. 2a is a diagram illustrating element mapping of the catalyst support of Comparative Example 2. It is seen from Fig. 2a that barium oxide particles are in an aggregated state and the aggregate has a size of about 30 nm. This is considered to be attributable to the fact that since the ceria particle as a support does not contain lanthanum in the catalyst support of Comparative Example 2, the barium oxide particle on the ceria surface relatively freely moves and consequently, an aggregate of barium oxide particles is generated.

Fig. 2b is a diagram illustrating element mapping of the catalyst support of Example 4. It is seen from Fig. 2b that barium oxide particles are in a dispersed state and the size of the barium oxide particle is about 5 nm. This is considered to be attributable to the fact that since the ceria particle contains lanthanum in the catalyst support of Example 4, a crystal plane of lanthanum is joined with a crystal plane of barium and movement of a barium oxide particle on the lanthanum-added ceria surface is prohibited.

### (Evaluation 2: XPS measurement)

The catalyst supports of Examples 1 to 7 and Comparative Examples 1 to 4 were subjected to measurement by X-ray Photoelectron Spectroscopy (XPS) (apparatus: PHI 5000 VersaProbeII, manufactured by ULVAC-PHI). The conditions (a) to (c) employed in the measurement are shown below.
(a) X-Ray source: Mg STD
(b) Output: 400 (W)
(c) Analysis area φ: 1,000 (µm)

As to the results of XPS measurement and analysis, the value (La/Ce) of the molar amount of lanthanum divided by the molar amount of cerium is shown in Table 3 below.

**Table 3**

| Example | CeO₂ (mass%) | La₂O₃ (mass %) | Ba (parts by mass) | La/Ce (XPS) | La/Ce (entire) |
|---|---|---|---|---|---|
| Example 1 | 95 | 5 | 8 | 0.029 | 0.057 |
| Example 2 | 95 | 5 | 8 | 0.032 | 0.057 |
| Example 3 | 95 | 5 | 2 | 0.039 | 0.057 |
| Example 4 | 95 | 5 | 8 | 0.039 | 0.057 |
| Example 5 | 95 | 5 | 24 | 0.039 | 0.057 |
| Example 6 | 90 | 10 | 8 | 0.097 | 0.117 |
| Example 7 | 85 | 15 | 8 | 0.154 | 0.186 |
| Comparative Example 1 | 100 | 0 | 2 | 0.000 | 0.000 |
| Comparative Example 2 | 100 | 0 | 8 | 0.000 | 0.000 |
| Comparative Example 3 | 100 | 0 | 24 | 0.000 | 0.000 |
| Comparative Example 4 | 95 | 5 | 0 | 0.039 | 0.057 |

The "Ba (parts by mas)" in Table 3 means the parts by mass of only barium (Ba) when the total of ceria (CeO₂) and lanthana (La₂O₃) is taken as 100 parts by mass.

From "La/Ce (XPS)" in Table 3, it is seen that the proportion of lanthanum near the surface of the ceria particle increases in order of Example 1, Example 2 and Examples 3 to 5. This is considered to be attributable to the difference in the production method of the catalyst supports of Examples 1, 2, and 3 to 5.

For example, in Example 1, a composite hydroxide of cerium and lanthanum is prepared and therefore, lanthanum is considered to be substantially uniformly distributed in the resulting ceria particle. On the other hand, in Example 2, after preparing a ceria particle, the ceria particle is impregnated with an aqueous solution of lanthanum salt and therefore, a relatively large amount of lanthanum is considered to be present near the surface of the resulting ceria particle.

Furthermore, in Examples 2 to 5, a ceria particle is impregnated with a lanthanum salt-containing solution and therefore, a relatively large amount of lanthanum is considered to be present near the outermost surface of the resulting ceria particle.

Among these, in Examples 3 to 5, the proportion of lanthanum near the surface of the ceria particle is larger than that in Example 2.

This is considered to be attributable to the fact that the ceria particle is synthesized from a hydroxide and the particle has voids or pores in Example 2. Specifically, it is revealed that a lanthanum salt-containing solution readily penetrates inside of the ceria particle of the catalyst support of Example 2 and in turn, the proportion of lanthanum in the surface part of the ceria particle becomes relatively small.

On the other hand, in the ceria particles of the catalyst supports of Examples 3 to 5, the particle has almost no void or hole, and this is considered to be responsible for the result above. Specifically, it is revealed that a lanthanum salt-containing solution hardly penetrates inside of the ceria particles of the catalyst supports of Examples 3 to 5 and in turn, the proportion of lanthanum in the surface part of the ceria particle becomes relatively large.

In Table 3, the value of La/Ce (XPS) determined from the results of XPS measurement is relatively small compared to the value of La/Ce (entire) calculated from the ratio of contents charged, but this is considered to occur due to an error in XPS measurement. Generally, in the XPS measurement, a sample surface is irradiated with X-ray and subsequently, the kinetic energy of photoelectron emitted from the sample surface is measured. In the case where the sample surface is uneven, it is known that the incident angle, etc., of X-ray are not uniform and therefore, an error is caused in the results of XPS measurement.

### (Evaluation 3: measurement of NOx storage amount)

The NOx storage amount was evaluated by placing the catalyst support of each example in a model gas evaluation apparatus (Model: SIG1000) manufactured by HORIBA, and flowing a model gas into the apparatus.

The model gas was composed of a rich gas or a lean gas, and the temperature thereof was 430°C. First, a rich gas at a flow velocity of 10 (L/min) was flowed over 5 minutes to minimize the NOx storage amount of the exhaust gas purification catalyst, and thereafter, a lean gas at a flow velocity of 10 (L/min) was flowed over 15 minutes. The total amount (NOₒᵤₜ) of NOx in the lean gas discharged was subtracted from the total amount (NOᵢₙ) of NOx in the lean gas fed, and the total amount of NOx stored in the catalyst support was thereby calculated.

The compositions of the rich gas and the lean gas are shown in Table 4 below.

**Table 4**

| | Rich Gas | Lean Gas |
|---|---|---|
| O₂ (%) | 0 | 8 |
| CO₂ (%) | 10 | 10 |
| CO (%) | 0 | 0 |
| C₃H₆ (ppmC) | 0 | 0 |
| NO (ppm) | 0 | 75 |
| NO₂ (ppm) | 0 | 75 |
| H₂ (%) | 1 | 0 |
| H₂O (%) | 3 | 3 |

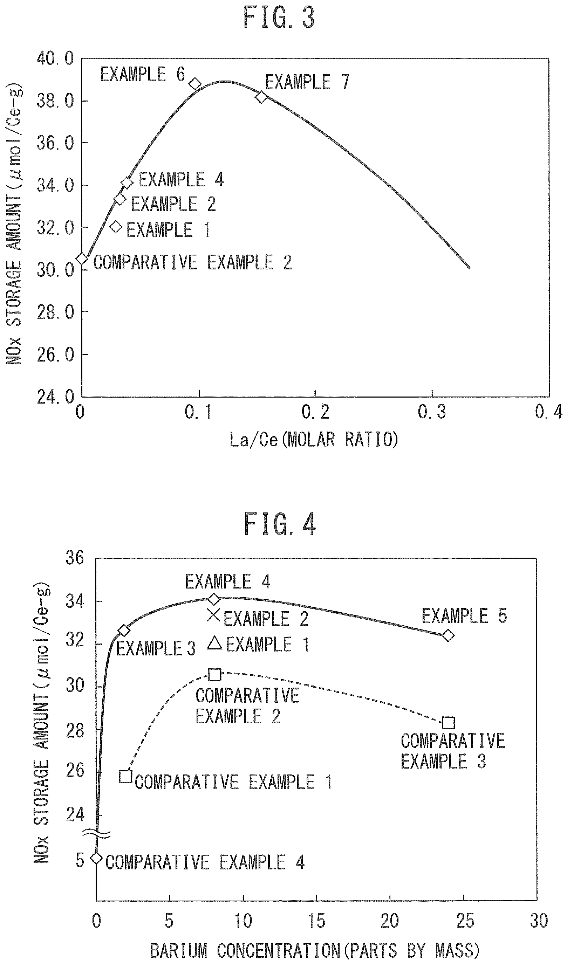

In addition, the measurement results of NOx storage amount are shown in Table 5 and Figs. 3 and 4. Here, the NOx storage amount is converted into the NOx storage amount (µmol) per g of cerium.

**Table 5**

| Example | CeO₂ (mass%) | La₂O₃ (mass%) | Ba (parts by mass) | La/Ce (XPS) | NOx Storage Amount |
|---|---|---|---|---|---|
| Example 1 | 95 | 5 | 8 | 0.029 | 32.00 |
| Example 2 | 95 | 5 | 8 | 0.032 | 33.40 |
| Example 3 | 95 | 5 | 2 | 0.039 | 32.60 |
| Example 4 | 95 | 5 | 8 | 0.039 | 34.10 |
| Example 5 | 95 | 5 | 24 | 0.039 | 32.40 |
| Example 6 | 90 | 10 | 8 | 0.097 | 38.80 |
| Example 7 | 85 | 15 | 8 | 0.154 | 38.10 |
| Comparative Example 1 | 100 | 0 | 2 | 0.000 | 25.80 |
| Comparative Example 2 | 100 | 0 | 8 | 0.000 | 30.50 |
| Comparative Example 3 | 100 | 0 | 24 | 0.000 | 28.30 |
| Comparative Example 4 | 95 | 5 | 0 | 0.039 | 4.95 |

Fig. 3 is a diagram illustrating the relationship between La/Ce and the NOx storage amount (µmol/Ce-g), regarding the catalysts supports of Examples 1, 2, 4, 6 and 7 and Comparative Example 2. In these examples, the amount of barium as the NOx storage material was consistently 8 parts by mass.

It is seen from Fig. 3 that the NOx storage amount of the catalyst supports of Examples 1, 2 and 4 where the ceria particle contains lanthanum, is large compared with that of Comparative Example 2 where the ceria particle does not contain lanthanum. This is considered to occur because aggregation of barium particles under high temperature was prohibited by lanthanum.

In addition, it is seen from Fig. 3 that the NOx storage amount increases in the order of Example 1, Example 2 and Example 4. This is considered to occur because the proportion of lanthanum in the surface part of the ceria particle decreases in the order above and the aggregation of barium particles is more effectively suppressed.

Next, the catalyst supports of Examples 4, 6 and 7 which were produced using the same materials and were different from each other in the proportions of ceria and lanthana are described.

It is seen from Table 5 that the value of La/Ce (XPS) of Examples 4, 6 and 7 increases in this order and is 0.039, 0.097, and 0.154, respectively. On the other hand, it is seen from Fig. 3 that with respect to the NOx storage amount of the catalyst support, the value of Example 6 is highest and an upwardly convex curve (hereinafter, sometimes referred to as "NOx storage amount curve") with a peak at this value is formed.

This fact reveals that the value of La/Ce (XPS) of Example 6 is higher than that in Example 4 and since the proportion of lanthanum on the ceria particle surface is relatively high in Example 6, the particle growth of barium particle is more efficiently suppressed.

In addition, the fact above reveals that the value of La/Ce (XPS) of Example 6 is lower than that in Example 7 and since the proportion of lanthanum on the ceria particle surface is relatively small in Example 6, aggregation of lanthanum particles is efficiently suppressed.

Next, the range of the value of La/Ce (XPS), in which a high NOx storage amount can be achieved, is discussed.

It is seen from Table 5 that the NOx storage amount of Example 1 is about 32 µmol/Ce-g and shows a higher value than those in Comparative Examples 1 to 4. In addition, it is seen from Table 5 that the value of La/Ce (XPS) of Example 1 is 0.029.

It is seen from Fig. 3 that the range of the value of La/Ce (XPS), in which a higher NOx storage amount than the NOx storage amount above (about 32 µmol/Ce-g) is achieved, is from 0.029 to 0.30 based on the NOx storage amount curve. This reveals that when at least the value of La/Ce (XPS) is in this range, a high NOx storage amount can be achieved.

Fig. 4 is a diagram illustrating the relationship between (parts by mass) of barium and the NOx storage amount (µmol/Ce-g), regarding the catalysts supports of Examples 1 to 5 and Comparative Examples 1 to 4.

It is seen from Fig. 4 that among Comparative Examples 1 to 3 where only the amount of barium supported is different from each other, the NOx storage amount of the catalyst support of Comparative Example 2 (Ba: 8 parts by mass) is large compared with those of Comparative Example 1 (Ba: 2 parts by mass) and Comparative Example 3 (Ba: 24 parts by mass). This reveals that when the barium concentration is relatively low, for example, 24 parts by mass or less, aggregation of barium oxide particles can be prohibited and when the barium concentration is relatively high, for example, 2 parts by mass or more, a large amount of NOx can be stored.

In addition, it is seen from Fig. 4 that among Examples 3 to 5 where only the amount of barium supported is different from each other, the NOx storage amount of the catalyst support of Example 4 (Ba: 8 parts by mass) is large compared with those of Example 3 (Ba: 2 parts by mass) and Example 5 (Ba: 24 parts by mass). This reveals that the same theory as to Comparative Examples 1 to 3 applies.

From these results, it is understood that the NOx storage amount is enhanced when the barium concentration is about 8 parts by mass. Furthermore, as described in the discussion regarding Fig. 3 above, among Examples 1, 2 and 4 and Comparative Example 2 where the barium concentration is 8 parts by mass and is the same with each other, the NOx storage amount is largest in the catalyst support of Example 4 where the lanthanum concentration near the surface of the ceria particle is highest.

While the preferred embodiments of the present invention are described in detail, it will be understood by one skilled in the art that as regards the devices, instruments, chemicals, etc., used in the present invention, the manufacturers, grades, qualities, etc., thereof can be changed without departing from the scope of claims.

According to the present invention, a gas purification catalyst having enhanced NOx storage performance can be provided.

## Claims

1. An exhaust gas purification catalyst comprising a ceria particle as a support, and barium supported on the ceria particle, wherein
the ceria particle contains lanthanum in its surface part, and
when the ceria particle is measured by X-ray photoelectric spectroscopy, the value of the molar ratio of lanthanum atom to cerium atom is 0.029 or more.

2. The exhaust gas purification catalyst according to claim 1, wherein when the total amount of ceria and lanthanum is taken as 100 parts by mass, the amount of barium supported is 1 part by mass or more and 24 parts by mass or less.

3. The exhaust gas purification catalyst according to claim 1 or 2, wherein the particle diameter of the ceria particle is 100 nm or less.

4. The exhaust gas purification catalyst according to any one of claims 1 to 3, wherein a catalyst metal is further supported on the ceria particle.

5. The exhaust gas purification catalyst according to any one of claims 1 to 4, which is a catalyst for purifying NOx.

6. A process for purifying NOx in an exhaust gas comprising contacting the exhaust gas with the exhaust gas purification catalyst according to claim 1.
